# EUROPÄISCHE PATENTSCHRIFT

(11) **EP 1 437 173 B1**
(45) Veröffentlichungstag und Bekanntmachung des Hinweises auf die Patenterteilung: **11.01.2006**
(21) Anmeldenummer: 03405814.9
(22) Anmeldetag: 14.11.2003
(51) Int. Cl.: B01F 5/06, B29C 45/58, B29C 47/36

(54) **Statischer Mischer für hochviskose Medien**
Static mixer for highly viscous media
Mélangeur statique pour milieux très visqueux

(30) Priorität: 13.12.2002 EP 02406099
(43) Veröffentlichungstag der Anmeldung: 14.07.2004
(73) Patentinhaber: Sulzer Chemtech AG, 8404 Winterthur (CH)
(72) Erfinder: Füglister, Alfred, 8522 Häuslenen (CH)
(74) Vertreter: Sulzer Management AG

(56) Entgegenhaltungen:
- EP-A- 0 646 408
- EP-A- 1 099 469

## Beschreibung

Die Erfindung betrifft einen statischen Mischer für hochviskose Medien gemäss Oberbegriff von Anspruch 1 und ein Mischelement zu diesem Mischer.

Aus der EP-A 0 646 408 ist ein statischer Mischer bekannt, mit dem sich hochviskose Polymerschmelzen homogenisieren lassen. Dieser Mischer ist als Mischkopf in der Düse einer Spritzgiessmaschine oder als Schmelzemischer im Anschluss an die Schnecke eines Extruders verwendbar. Er hat eine zylindrische Form und besteht aus mehreren Mischelementen sowie Hülsen, die in den zylindrischen Hohlraum eines Gehäuses eingesetzt sind. Die Mischelemente sind gegossene Körper. Sie enthalten Strukturen, beispielsweise Gitterstrukturen, die einen Mischvorgang in einer durchfliessenden Schmelze bewirken. Die in der EP-A 0 646 408 gezeigten Mischerstrukturen sind aus durch Stege gebildeten Lagen aufgebaut. Die Lagen sind in Richtung der Längsachse des Gehäuses parallel ausgerichtet. Die Stege benachbarter Lagen kreuzen sich. Bei einer bevorzugten Ausführungsform bilden die Hülsen zusammen mit flanschartigen Ringen der Mischerstrukturen einen rohrförmigen Mantel, innerhalb dem die Mischerstrukturen hintereinander angeordnet sind. In benachbarten Mischerstrukturen sind die Orientierungen der Lagen jeweils um einen vorgegebenen Winkel, vorzugsweise um 90°, gegeneinander versetzt.

Ein weiterer statischer Mischer ist aus der EP-A-1 099 469 bekannt.

In Spritzgiessmaschinen werden Polymerschmelzen bei hohem Druck und pulsierend in Giessformen (den Werkzeugen) eingespritzt. Es sind Spritzgiessmaschinen in einer Weise weiter entwickelt worden, dass sich die Durchsatzleistungen sowie die Einspritzdrücke vergössern lassen. Aufgrund hoher Wechselbelastungen ergeben sich Spannungsspitzen, welche die eingebauten Mischelemente mechanisch stärker beanspruchen.

Aufgabe der Erfindung ist es, einen statischen Mischer zu schaffen, der den Anforderungen in den neueren Spritzgiessmaschinen besser gewachsen ist. Diese Aufgabe wird durch den im Anspruch 1 definierten Mischer gelöst.

Der statische Mischer für ein hochviskoses, strömendes Fluid umfasst Mischelemente, die monolithisch ausgebildet sind, und rohrstückartige Hülsenelemente, mittels denen die Mischelemente positioniert sind, sowie ein Gehäuse, in das die Hülsenelemente zusammen mit den Mischelementen eingeschoben sind. Die Mischelemente weisen jeweils eine Gitterstruktur auf. Stege dieser Gitterstruktur kreuzen sich auf Kreuzungsstellen, die auf balkenartigen Bereichen quer zu einer Hauptströmungsrichtung des Fluids angeordnet sind, wobei die Hauptströmungsrichtung durch eine Längsachse des Gehäuses gegeben ist. Die Hülsenelemente stehen an ihren Enden über Stossflächen in Kontakt. An diesen Enden bestehen Aussparungen, in die formschlüssig - in einer zu den Aussparungen komplementären Form - zwei Rippen der Mischelemente eingelegt sind. Die Rippen sind ringsegmentartig ausgebildet. Zwei Endflächen jeder Rippe sind so angeordnet, dass Mittelpunkte der Endflächen jeweils durch Linien verbindbar sind, die zumindest angenähert gleich wie die balkenartigen Bereiche der Kreuzungsstellen ausgerichtet sind. Diese balkenartigen Bereiche haben Querschnittsflächen, die nicht grösser als radiale Querschnittsflächen der Rippen sind.

Die abhängigen Ansprüche 2 bis 4 betreffen vorteilhafte Ausführungsformen des erfindungsgemässen Mischers. Die Ansprüche 5 und 6 beziehen sich auf das Mischelement dieses Mischers.

Nachfolgend wird die Erfindung anhand der Zeichnungen erläutert. Es zeigen:
- Fig. 1: ein bekanntes Mischelement,
- Fig. 2: teilweise abgebildet eine Düse mit Mischkopf,
- Fig. 3: Längsschnitt durch das Mischelement der Fig. 1 und ein Hülsenelement,
- Fig. 4: ein erstes erfindungsgemässes Mischelement,
- Fig. 5: ein zweites erfindungsgemässes Mischelement,
- Fig. 6: eine weiter modifizierte Ausführungsform und
- Fig. 7: ein Hülsenelement für das Mischelement der Fig. 6.

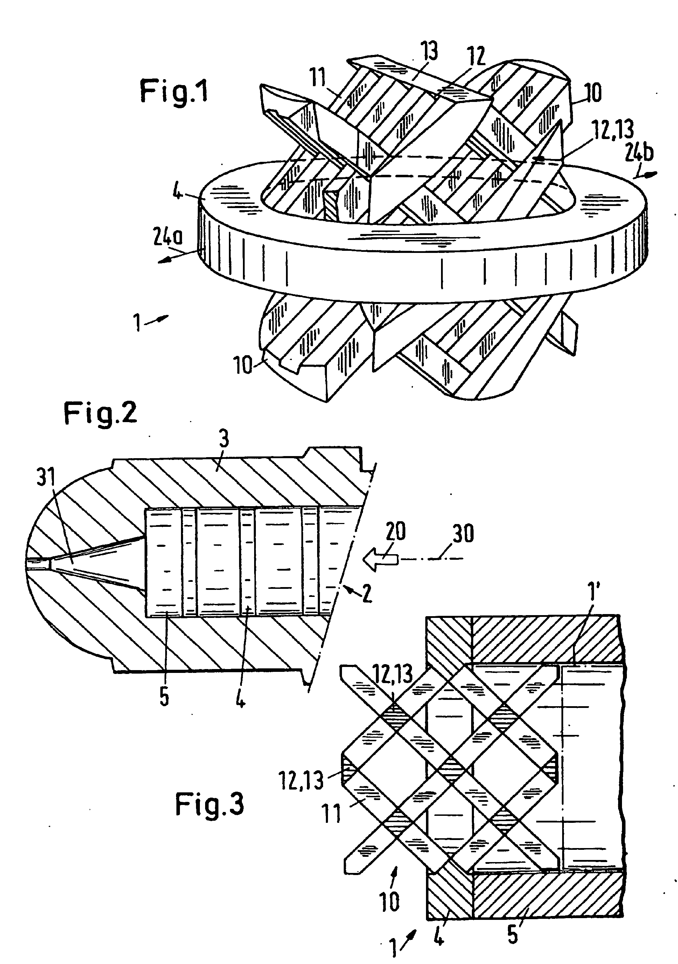

Ein statischer Mischer, der für die Homogenisierung eines hochviskosen Fluidstroms vorgesehen ist, umfasst ein Gehäuse, in das Mischelemente zusammen mit rohrstückartigen Hülsenelementen eingeschoben sind. Mit den Hülsenelementen werden die Mischelemente positioniert. In den Figuren 1 und 3 ist ein bekanntes Mischelement 1 abgebildet, das monolithisch ausgebildet ist und sich beispielsweise mittels Präzisionsguss herstellen lässt. Bei diesem Verfahren wird eine Gussform mit einem Wachskörper, Aufbringen einer keramischen Hülle auf den Wachskörper, anschliessendem Entfemen des Wachses und Brennen der keramischen Hülle gebildet. Das zu homogenisierende Fluid, eine Polymerschmelze 20, durchströmt einen statischen Mischer 2 in einem Gehäuse 3 - siehe Fig. 2 - in einer Hauptströmungsrichtung 30, die durch eine Längsachse des Gehäuses 3 gegeben ist.

Eine mischwirksame Struktur - nämlich die gitterartige Mischerstruktur 10 - und ein Ring 4 bilden das Mischelement 1 in Form eines monolithischen Körpers. Die Mischerstruktur 10 setzt sich aus in Lagen angeordneten Stegen 11 zusammen. Die Stege 11 weisen jeweils einen rechteckigen oder quadratischen Querschnitt auf. Die Lagen sind in Hauptströmungsrichtung 30 parallel zueinander orientiert. Die Stege 11 benachbarter Lagen kreuzen sich und schliessen bezüglich der Hauptströmungsrichtung 30 einen einheitlichen Winkel von 45° ein. Dieser Winkel kann auch einen Wert zwischen 10 und 70° haben. Die Stege 11 der Mischerstruktur 10 kreuzen sich an Kreuzungsstellen 12, die auf balkenartigen Bereichen 13 quer zur Hauptströmungsrichtung 30 angeordnet sind.

In Fig. 2 ist das Gehäuse 3 mit dem statischen Mischer 2 abgebildet, nämlich eine Düse 31 mit einem Mischkopf, wie sie in Spritzgiessmaschinen zum Einsatz kommt. Beim statischen Mischer 2 erkennt man Hülsen - die Hülsenelemente 5 - und Ringe 4 der Mischelemente 1. Der statische Mischer 2 hat einen äusseren Durchmesser, mit dem er formschlüssig in den zylindrischen Innenraum des Gehäuses 3 passt.

Fig. 3 zeigt einen Längsschnitt durch das Mischelement 1 der Fig. 1 und durch einen Teil eines Hülsenelements 5. Der Umriss eines benachbarten Mischelements 1' ist - zu einem Teil - strichpunktiert angegeben. Die Schnittfläche dieses Längschnitts liegt entlang der Grenze zwischen zwei benachbarten Lagen. In diesem Schnitt sind die balkenartigen Bereiche 13 der Kreuzungsstellen 12 als Querschnitte erkennbar. Nachfolgend werden diese Bereiche kurz "Kreuzungsbalken 13" genannt.

Bei der Verwendung des statischen Mischers 2 in einer Spritzgiessmaschine wird das Mischelement 1 einer Belastung ausgesetzt, die zu einem anisotropen Dehnungsverhalten führt: Aufgrund des hohen Drucks, mit der die Polymerschmelze 20 gefördert werden muss, vergrössert sich das Volumen des Gehäuseinnenraums. Das Mischelement 1 gibt dieser Volumenänderung in Richtung quer zu den Kreuzungsbalken 13 nach (Pfeile 24a, 24b in Fig. 1). Senkrecht zu dieser Richtung, d.h. in Richtung der Kreuzungsbalken 13 ist eine Deformation wesentlich geringer. Ein Pulsieren des Drucks hat eine periodische Formänderung des Mischelements 10 zur Folge, die im Ring 4 mit hohen lokalen Spannungen verbunden ist.

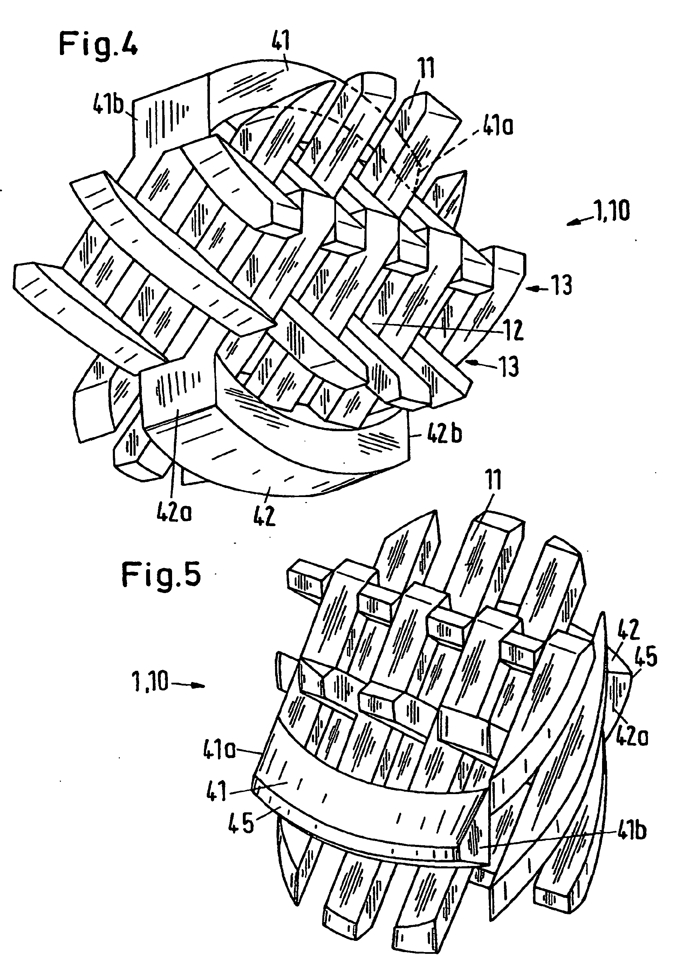

Fig. 4 zeigt ein erstes erfindungsgemässes Mischelement 1, in dem wesentlich geringere Belastunsspitzen auftreten. Während das bekannte Mischelement einen umlaufenden Ring 4 aufweist, liegen nun im neuen Mischelement zwei Ringsegmente oder Rippen 41 und 42 vor. Diese neue Geometrie erlaubt ein Dehnungsverhalten, das - verglichen mit jenem des bekannten, in der Fig. 1 gezeigten Mischelements 1 - wesentlich ausgeglichener ist, so dass geringere Maximalspannungen auftreten. Die pulsiert geförderte Polymerschmelze 20 übt daher mit einem auf- und abschwellenden Druck eine weniger hohe Materialbelastung aus.

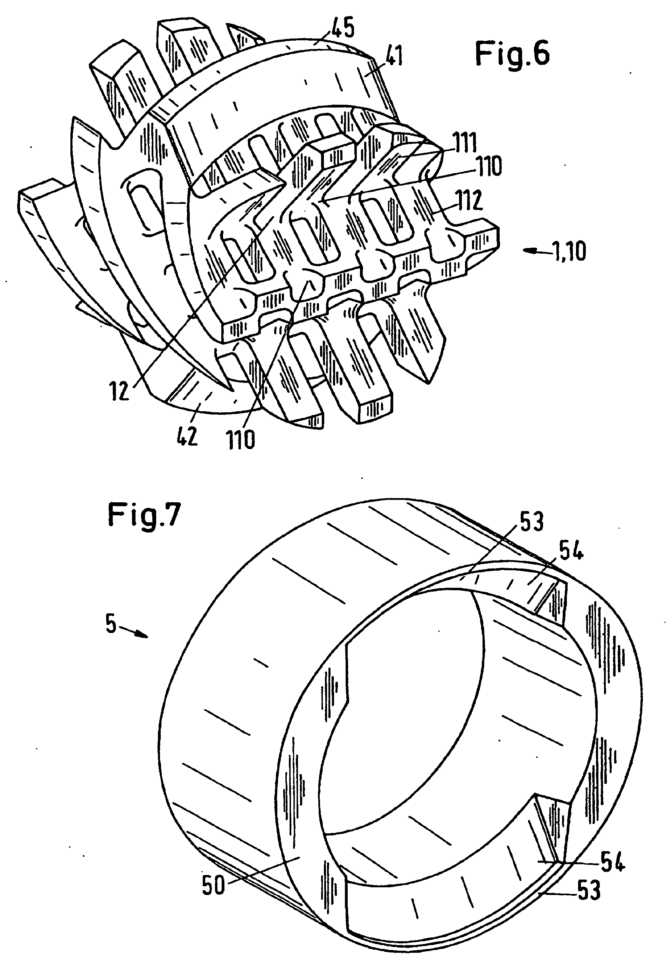

Die Hülsenelemente 5 stehen an ihren Enden über Stossstellen in Kontakt. An diesen Enden bestehen Aussparungen, in die zwei Rippen 41, 42 der Mischelemente 1 formschlüssig - in einer zu den Aussparungen komplementären Form - eingelegt sind (vgl. Figuren 8 und 7). Die Rippen 41, 42 sind im wesentlichen parallel zu den Kreuzungsbalken 13: Zwei Endflächen 41a, 41b bzw. 42a, 42b der Rippen 41, 42 sind jeweils so angeordnet, dass Mittelpunkte dieser Endflächen durch Linien verbindbar sind, die zumindest angenähert gleich wie die Kreuzungsbalken 13 ausgerichtet sind. Radiale Querschnittsflächen der Rippen 41, 42 werden aus Festigkeitsgründen mit grösseren Querschnittsflächen als bei den Kreuzungsbalken 13 ausgebildet.

Fig. 6 zeigt das Mischelement 1 der Fig. 5 in einer Ausführungsform, bei der Ecken einerseits an den Kreuzungsstellen 12 der Stege 11 und andererseits an den Verbindungsstellen der Stege 11 zu den Rippen 41, 42 als kontinuierlich gekrümmte Übergänge ausgebildet sind: In Umgebungsbereichen dieser Übergänge sind Oberflächenelemente 111 und 112, die quer zu einander stehen, durch gerundete Flächenabschnitte 110 verbunden. Die Krümmungsradien dieser Flächenabschnitte 110 sind grösser als rund 10% eines diagonalen Stegdurchmessers. In den kerbartigen Ecken der in Fig. 5 abgebildeten Ausführungsform bilden sich im Betrieb Spannungsspitzen aus. Durch die Ausrundung der Ecken werden diese Spannungsspitzen erheblich verringert.

Fig. 7 zeigt ein Hülsenelement 5 für das Mischelement 1 der Fig. 6. Keilförmige Aussparungen 54 für die Rippen 41, 42 sind auf Bereiche beschränkt, die sich nicht bis zu der Innenwand des Gehäuses 3 erstrecken. Ein kleiner Kamm 53 an der äusseren Oberfläche des Hülsenelements 5 schirmt die Scheitel 45 der keilförmigen Rippen 41, 42 von einem Kontakt mit dem Gehäuse 3 ab. Dies ist beim Hineinschieben oder Herausziehen des Mischers 2 in das bzw. aus dem Gehäuse 3 vorteilhaft, da ein Verkanten nicht mehr auftritt und somit eine Montage des Mischers erheblich vereinfacht wird. In die Aussparungen 54 des Hülsenelements 5 kommt jeweils nur eine Hälfte der keilartigen Rippen 41, 42 zu liegen. Die anderen Hälften werden durch benachbarte Hülsenelemente aufgenommen (nicht dargestellt). Benachbarte Hülsenelemente 5 stehen an ihren Enden über ebene Stossflächen 50 in Kontakt.

Neben den bereits genannten Massnahmen, mit denen die mechanische Stabilität des Mischelements 1 verbessert wird (nämlich Rippen und gerundete Ecken), ist auch die Wahl eines optimalen Materials ein weiteres Mittel zum gleichen Zweck. Inconel, insbesondere IN718, wird mit Vorteil als Gussmaterial für die Mischelemente 1 verwendet. Die Hülsenelemente 5 können aus einem Vergütungsstahl massgenau gefertigt werden.

Die Rippen 41, 42 des gegossenen Mischelements 1 können an ihren Oberflächen durch Schleifen nachbearbeitet werden. Zweck einer solchen Nachbearbeitung ist, einen exakten Formschluss in den Aussparungen 54 der Hülsenelemente 5 zu erhalten.

## Patentansprüche

1. Statischer Mischer (2) für ein hochviskoses, strömendes Fluid (20) mit Mischelementen (1), die monolithisch ausgebildet sind, mit rohrstückartigen Hülsenelementen (5), mittels denen die Mischelemente positioniert sind, und mit einem Gehäuse (3), in das die Hülsenelemente zusammen mit den Mischelementen eingeschoben sind, wobei die Mischelemente jeweils eine Gitterstruktur (10) umfassen, Stege dieser Gitterstruktur sich auf Kreuzungsstellen (12) kreuzen, die auf balkenartigen Bereichen (13) quer zu einer Hauptströmungsrichtung (30) des Fluids angeordnet sind, und die Hauptströmungsrichtung durch eine Längsachse des Gehäuses gegeben ist, wobei
die Hülsenelemente an ihren Enden über Stossflächen (50) in Kontakt stehen, dass an diesen Enden Aussparungen (54) bestehen, in die formschlüssig - in einer zu den Aussparungen komplementären Form - zwei Rippen (41, 42) der Mischelemente eingelegt sind, **dadurch gekennzeichnet, dass** dass die Rippen ringsegmentartig ausgebildet sind, dass zwei Endflächen (41 a, 41 b, 42a, 42b) jeder Rippe so angeordnet sind, dass Mittelpunkte der Endflächen jeweils durch Linien verbindbar sind, die zumindest angenähert gleich wie die balkenartigen Bereiche (13) der Kreuzungsstellen ausgerichtet sind, und dass diese balkenartigen Bereiche Querschnittsflächen haben, die nicht grösser als radiale Querschnittsflächen der Rippen sind.

2. Mischer nach Anspruch 1, **dadurch gekennzeichnet, dass** die Stege (11) jeweils einen rechteckigen, vorzugsweise zumindest angenähert quadratischen Querschnitt aufweisen, dass an den Kreuzungsstellen (12) der Stege und an den Verbindungsstellen der Stege zu den Rippen Übergänge so ausgebildet sind, dass in Umgebungsbereichen der Übergänge Oberflächenelemente (111, 112), die quer zu einander stehen, durch gerundete Flächenabschnitte (110) verbunden sind, und dass die Krümmungsradien dieser Flächenabschnitte grösser als 10% eines diagonalen Durchmessers der Stege sind.

3. Mischer nach Anspruch 1 oder 2, **dadurch gekennzeichnet, dass** radiale Querschnittsflächen der Rippen (41, 42) keilförmig sind, wobei ein Scheitel (45) der Keilform gegen aussen gerichtet ist.

4. Mischer nach einem der Ansprüche 1 bis 3, **dadurch gekennzeichnet, dass** die Aussparungen (54) für die Rippen (41, 42) auf Bereiche beschränkt sind, die sich nicht bis zu einer Innenwand des Gehäuses erstrecken.

5. Mischelement (1) für einen Mischer (2) gemäss einem der Ansprüche 1 bis 4.

6. Mischelement nach Anspruch 5, **dadurch gekennzeichnet, dass** die Rippen (41, 42) des Mischelements (1) an deren Oberflächen durch Schleifen nachbearbeitet sind, zum Zweck, einen exakten Formschluss in den Aussparungen (54) der Hülsenelemente (5) herzustellen.

## Claims

1. A static mixer (2) for a high-viscosity flowing fluid (20) with mixing elements (1) of monolithic design, with tubular sleeve elements (5) by means of which the mixing elements are positioned, and with a housing (3) into which the sleeve elements are inserted together with the mixing elements, wherein the mixing elements each include a lattice structure (10), wherein webs of this lattice structure cross at crossing positions (12) which are arranged at bar-like regions (13) transversely to a main flow direction (30) of the fluid, and wherein the main flow direction being given by a longitudinal axis of the housing, with the sleeve elements being in contact at their ends via abutment surfaces (50); and with cut-outs (54) existing at these ends into which two ribs (41, 42) of the mixing elements are inserted in a shape-matched manner - in a shape complementary to the cut-outs ; **characterised in that in that** the ribs are made in the manner of ring segments; **in that** two end surfaces (41a, 41b, 42a, 42b) of each rib are each arranged such that centres of the end surfaces can be respectively connected by lines which are aligned at least approximately the same as the bar-like regions (13) of the crossing positions; and **in that** these bar-like regions have cross-sectional areas which are not larger than radial cross-sectional areas of the ribs.

2. A mixer in accordance with claim 1, **characterised in that** the webs (11) each have a rectangular, preferably at least approximately square, cross-section; **in that** transitions are formed at the crossing positions (12) of the webs and at the connection positions of the webs to the ribs such that surface elements (111, 112) standing transversely to one another are connected by rounded surface sections (110) in regions local to the transitions; and **in that** the radii of curvature of these surface sections are larger than 10% of a diagonal diameter of the webs.

3. A mixer in accordance with claim 1 or claim 2, **characterised in that** radial cross-sectional surfaces of the ribs (41, 42) are wedge-shaped, with an apex (45) of the wedge shape being directed to the outside.

4. A mixer in accordance with any one of claims 1 to 3, **characterised in that** the cut-outs (54) for the ribs (41, 42) are restricted to regions which do not extend up to an inner wall of the housing.

5. A mixing element (1) for a mixer (2) in accordance with any one of claims 1 to 4.

6. A mixing element in accordance with claim 5, **characterised in that** the ribs (41, 42) of the mixing element (1) are reworked by grinding at their surfaces for the purpose of producing a precise shape match in the cut-outs (54) of the sleeve elements (5).

## Revendications

1. Mélangeur statique (2) pour un fluide très visqueux (20) qui s'écoule, avec des éléments de mélange (1) qui sont réalisés de façon monolithe, avec des éléments de douille (5) en forme de pièces tubulaires au moyen desquels les éléments de mélange sont positionnés, et avec un boîtier (3) dans lequel les éléments de douille sont poussés ensemble avec les éléments de mélange, où les éléments de mélange comprennent à chaque fois une structure en treillis (10), des baguettes de cette structure en treillis se croisent à des emplacements de croisement (12) qui sont disposés sur des zones en forme de poutre (13) transversalement à une direction d'écoulement principale (30) du fluide, et la direction d'écoulement principale est fournie par un axe longitudinal du boîtier, où les éléments de douille sont en contact à leurs extrémités par des faces d'about (50), qu'il existe à ces extrémités des évidements (54) dans lesquels sont placés par concordance des formes 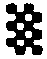 dans une forme complémentaire aux évidements 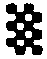 deux nervures (41,42) des éléments de mélange, **caractérisé en ce que** les nervures sont réalisées en forme de segment de cercle, **en ce que** deux faces d'extrémité (41a, 41b, 42a, 42b) de chaque nervure sont disposées de façon que les centres des faces d'extrémité puissent être reliés à chaque fois par des lignes qui sont orientées au moins approximativement d'une manière identique aux zones en forme de poutre (13) des emplacements de croisement, et **en ce que** ces zones en forme de poutre présentent des faces en section transversale qui ne sont pas plus grandes que les faces en section transversale radiales des nervures.

2. Mélangeur selon la revendication 1, **caractérisé en ce que** les baguettes (11) présentent à chaque fois une section transversale rectangulaire, de préférence au moins approximativement carrée, **en ce qu'**aux emplacements de croisement (12) des baguettes et aux emplacements de liaison des baguettes aux nervures, des passages sont réalisés de façon que dans des zones environnantes des passages, des éléments de surface (111, 112) qui s'étendent transversalement l'un à l'autre, soient reliés par des sections de face arrondies (110), et **en ce que** les rayons de courbure de ces sections de face sont plus grands que 10% d'un diamètre diagonal des baguettes.

3. Mélangeur selon la revendication 1 ou 2, **caractérisé en ce que** les faces radiales en section transversale des nervures (41, 42) sont en forme de coin, où un sommet (45) de la forme de coin est orienté vers l'extérieur.

4. Mélangeur selon l'une des revendications 1 à 3, **caractérisé en ce que** les évidements (54) pour les nervures (41, 42) sont limités à des zones qui ne s'étendent pas jusqu'à une paroi intérieure du boîtier.

5. Elément de mélange (1) pour un mélangeur (2) selon l'une des revendications 1 à 4.

6. Elément de mélange selon la revendication 5, **caractérisé en ce que** les nervures (41, 42) de l'élément de mélange (1) sont reprises à leurs surfaces par meulage dans le but d'établir une concordance des formes exacte dans les évidements (54) des éléments de douille (5).
